# EUROPEAN PATENT SPECIFICATION

(11) **EP 3 781 970 B1**
(45) Date of publication and mention of the grant of the patent: **15.11.2023**
(21) Application number: 19789111.2
(22) Date of filing: 17.04.2019
(51) Int. Cl.: G02B 6/00, G02B 6/38

(54) **FIBER OPTIC RECEPTACLE WITH AN INTEGRATED ENGAGEMENT DEVICE THEREIN**
GLASFASERBUCHSEN MIT EINER INTEGRIERTER HALTERUNGSVORRICHTUNG DARIN
RÉCEPTACLE DE FIBRE OPTIQUE À DISPOSITIF D'ENGAGEMENT INTÉGRÉ

(30) Priority: 17.04.2018 US 201862658806 P; 15.05.2018 US 201815979596
(43) Date of publication of application: 24.02.2021
(73) Proprietor: Senko Advanced Components Inc., Hudson, MA 01749 (US)
(72) Inventor: WONG, Kimman, Hong Kong (CN); MA, Sui Kei, hong Kong (CN); TAKANO, Kazuyoshi, Marlborough, Massachusetts 01752 (US)
(74) Representative: Friese Goeden Patentanwälte PartGmbB
(86) International application number: PCT/US2019/027996
(87) International publication number: WO 2019/204527

(56) References cited:
- EP-A2- 1 065 756
- WO-A1-2019/136047
- JP-A- 2004 354 693
- US-A- 5 971 625
- US-A1- 2009 290 838
- US-A1- 2014 050 446
- US-A1- 2016 131 858
- US-A1- 2016 178 855
- US-A1- 2017 276 881
- US-A1- 2018 292 618
- US-B1- 6 572 276
- US-B1- 9 726 830
- US-B2- 7 785 018
- US-B2- 9 927 582

## Description

### Field of the Invention

The present invention relates to fiber optic connectors and adapters, and more particularly, to fiber optic adapters for mating multi-fiber optic ferrule connectors and fiber optic connectors.

### Background of the Invention

Modern high capacity optical systems often utilize fiber optic ribbons for inter-system connection. As there are multiple connection points in an optical path, there are needs for mating two fiber optic ferrules or a ferrule to another connector. In the mating of two fiber optic ferrules or a ferrule and a connector, the mechanical and optical alignment is paramount. Slight misalignment can result in significant signal loss, especially in the case of ferrules and connectors for multi-fiber optic ribbons and cables. Therefore, there is a need for an adapter that can hold and secure two fiber optic ferrules or a ferrule and a connector in alignment with precision. The adapter design should also allow that installation of the ferrules and connectors that is easy enough for in-field assembly. Further, the adapter should be durable in design and/or material for repeated installations and uninstallations. Adapters are known from JP 2004 354693 A, US 6 572 276 B1 and US 2017/276881 A1.

### Summary of the Invention

According to the present invention, a fiber optic adapter according to claim 1 is provided. In an embodiment, the adapter is an adapter for mating a multi-fiber optic ferrule connector at a second end and a multi-fiber optic connector with a push/pull tab at a first end. The fiber optic adapter includes an integrated engagement device within a receptacle at a first end to secure a fiber optic connector therein, and a receptacle at a second end. An opening in second receptacle outer housing secures a latch on an outer housing of the multi-fiber optic ferrule connector. The multi-fiber optic ferrule connector comprises a housing with a plural of ferrules inserted from the front end as opposed to the rear, and the latch secures the ferrules in place, within the housing when the latch is secured in an opening of the housing. Without departing from the scope of the invention, the second receptacle may contain an integrated engagement device. The first fiber optic connector type used can differ from the second fiber optic connector type depending on the use of the engagement device or not.

An integrated engagement device has one or more flexible arms that are received and secured in a corresponding widthwise recess at a proximal end of the fiber optic connector. The arms latch the multi-fiber optic connector in place so as to secure the connector inside the receptacle of the adapter. The arms are configured to release the connector when the user pulls on a pull/push tab located at a distal end of the connector. The multi-fiber optic connector's proximal end may have a widthwise recess on a bottom or top surface, while a connector may have recess along a side to engage a similar engagement device. The multi-fiber optic connector may use a latch on the connector outer housing instead of the latch within the adapter structure or on the latch is on the engagement device.

According to embodiments of the claimed invention, the integrated engagement device is not a removable or replaceable single piece. In an embodiment, the engagement device is molded into the adapter housing of each receptacle. In an alternative embodiment, the integrated engagement device may be ultrasonic welded onto the inner housing of the adapter or similar method to secure device within receptacle. Due to the small size of connectors, adapters and engagement devices, molding the engagement device within the adapter reduces assembly time, breakage, lost parts, and misalignment upon insertion of a connector to be secured by said device. Since each engagement device is configured to correspond to a connector type, inventory and kitting is simplified to an adapter/connector pair.

In an embodiment, an adapter may be two piece comprising a front body portion housing either engagement device, and a second body portion accepting a latch on an outer housing of the multi-fiber optic ferrule connector. The two body portions are secured using existing components such as a plural of alignment sleeves press-fitted within openings in the body, snaps, or clips arranged between the body portions. Any receptacle of the portions may accept either engagement device.

In an alternative embodiment, the adapter may use a unitary or one-piece device with a plural of engagement devices. The unitary device is inserted into an adapter receptacle, and secured therein with a plural of protrusions on the exterior surface of the unitary device that are configured to engage corresponding adapter structure. The protrusions would snap in behind adapter structure and prevent movement of the unitary device upon insertion and release of a fiber optic connector.

In an alternative embodiment, an adapter portion may be preconfigured with an integrated engagement device for each receptacle, and adapter is separable into two portions. This engagement device may be molded as one-piece with adapter housing. The proximal end of a connector is closer to a ferrule, while a distal end is closer to a boot or cable holding fiber optic glass that is contained within a ferrule. The fiber optic glass carries the information signal. An adapter has a first end and a second end. An adapter may be a single housing or unitary body.

### Brief Description of the Drawings

Embodiments of the invention are described in more detail hereinafter with reference to the drawings, in which:

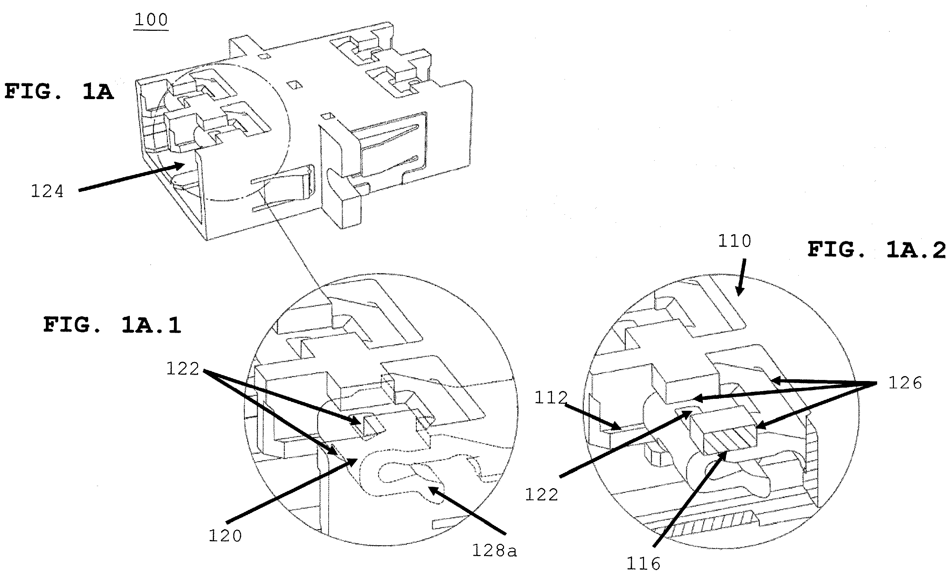

FIG. 1A depicts a fiber optic adapter, not part of the claimed invention, with a plural of receptacles on either side each have a single, releasable and replaceable engagement device therein;
FIG. 1A.1 is a zoomed view of the engagement device inserted into a receptacle of FIG. 1A without a multi-fiber optic ferrule connector secured therein;
FIG. 1A.2 is a zoomed view of the device of FIG.1A.1 illustrating engagement device secured in a receptacle where the device makes contact and is supported within the adapter structure;

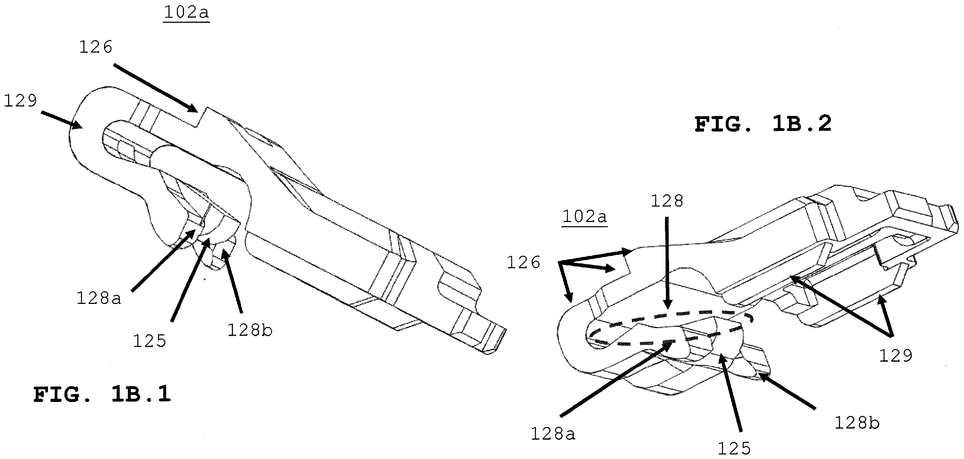

FIG. 1B.1 depicts a side perspective view of a unitary engagement device, that can be secured within adapter receptacle of FIG. 1A.1;
FIG. 1B.2 depicts a bottom, side perspective view of a unitary engagement device that can be secured within adapter receptacle of FIG. 1A.1;

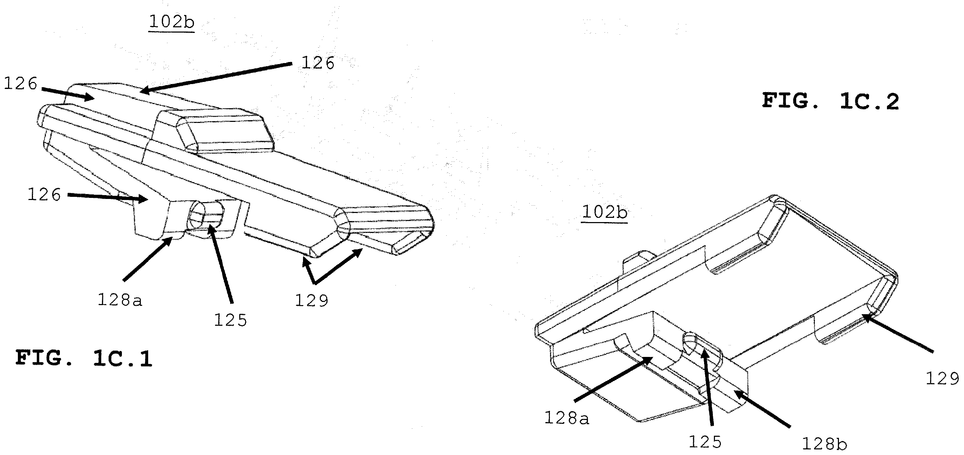

FIG. 1C.1 depicts a side perspective view of another embodiment of a unitary engagement device that can be secured within adapter receptacle of FIG. 1A.1.
FIG. 1C.2 depicts a bottom, side perspective view of FIG. 1C.1 unitary engagement device that can be secured within adapter receptacle of FIG. 1A.1;

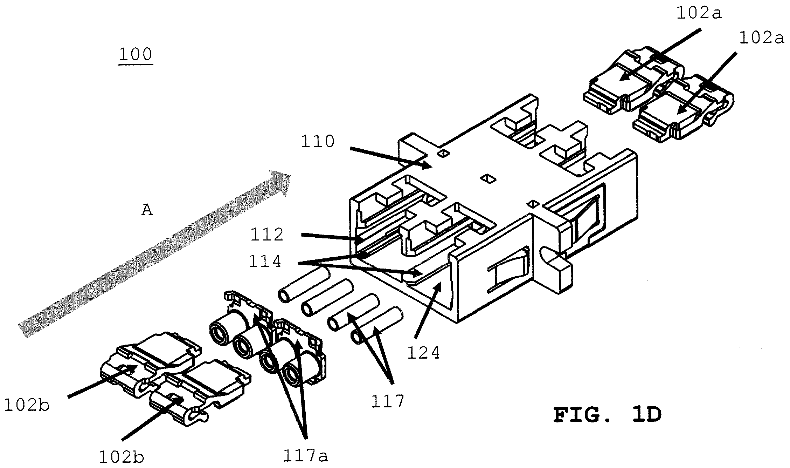

FIG. 1D is an exploded view of FIG. 1A;

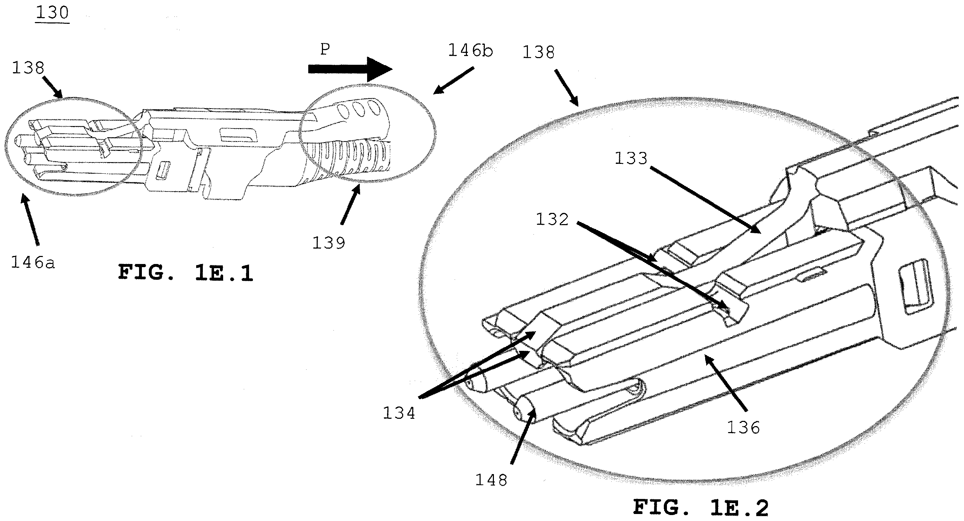

FIG. 1E.1 is a perspective of a CS^{®} multi-fiber optic connector, having a push-pull tab, inserted into an adapter of FIG. 1A and secured therein using an engagement device;
FIG. 1E.2 is a zoomed view of a proximal end of the multi-fiber optic connector of FIG. 1E.1;
FIG. 1F is a perspective view of a multi-fiber optic ferrule connector that can be secured in an end of the adapter of FIG. 1A without an engagement device;
FIG. 2A is a front perspective view of an embodiment, according to the claimed invention, of an adapter having an integrated engagement device within each receptacle port;
FIG. 2B is a perspective front angled view of a first portion of a detachable body of adapter of FIG. 2A;

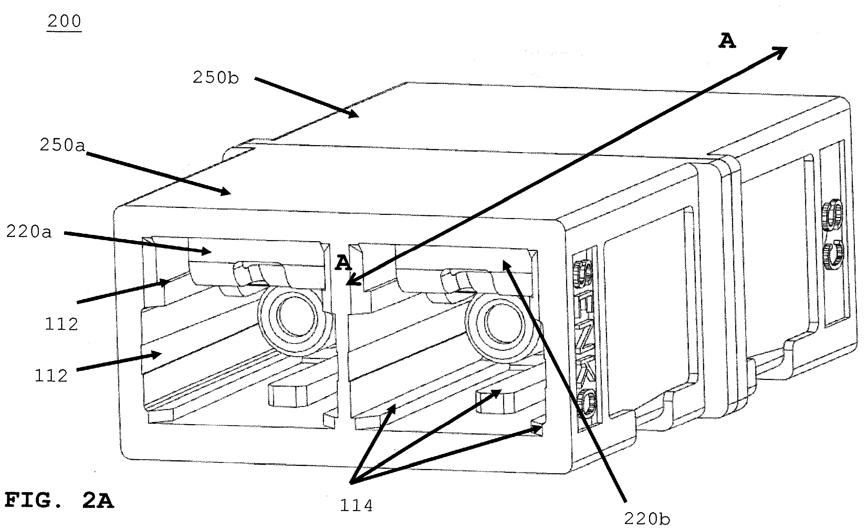

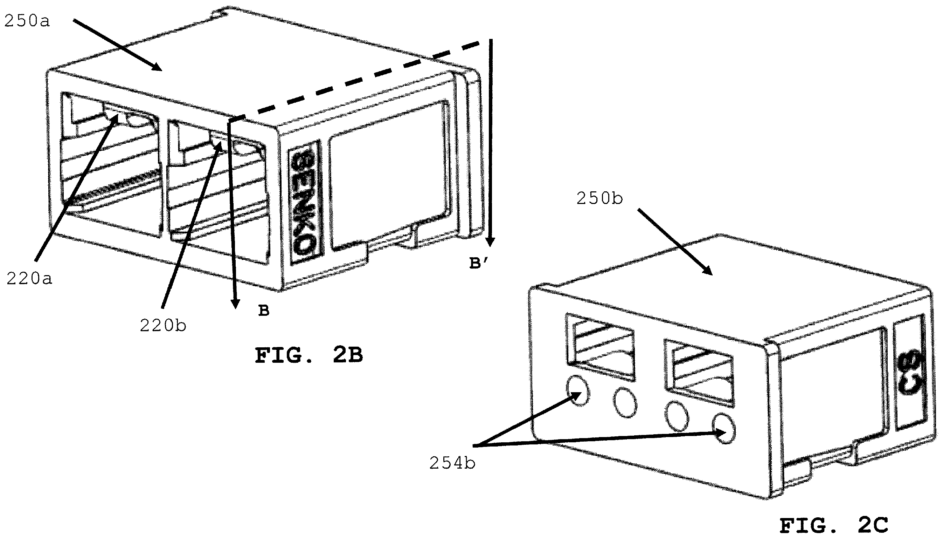

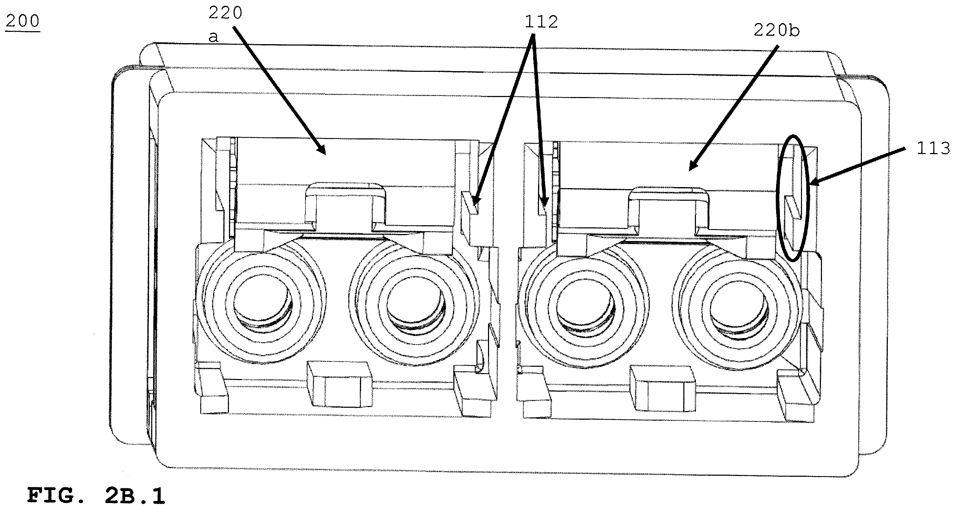

FIG. 2B.1 is a perspective view of a second portion of a detachable body of adapter of FIG. 2A;
FIG. 2C is a perspective view of an assembled adapter of FIG. 2A, having an engagement device integrated into each receptacle of the adapter;

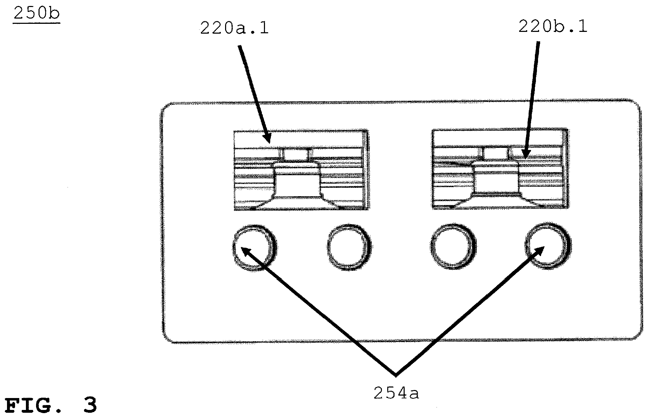

FIG. 3 is front view of the second portion of FIG. 2C after detached from a first body portion;

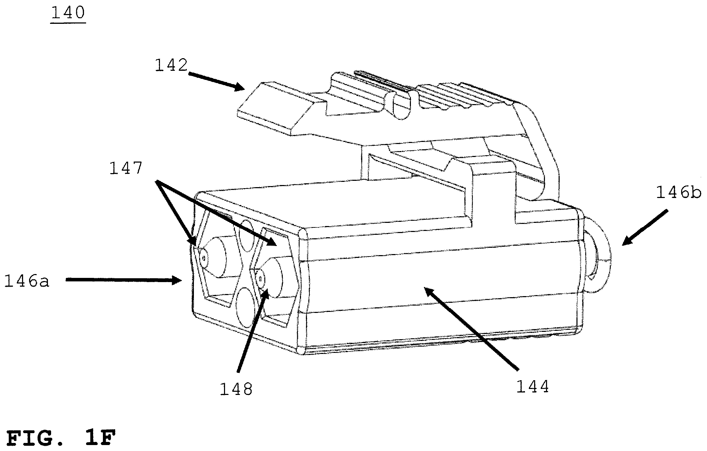

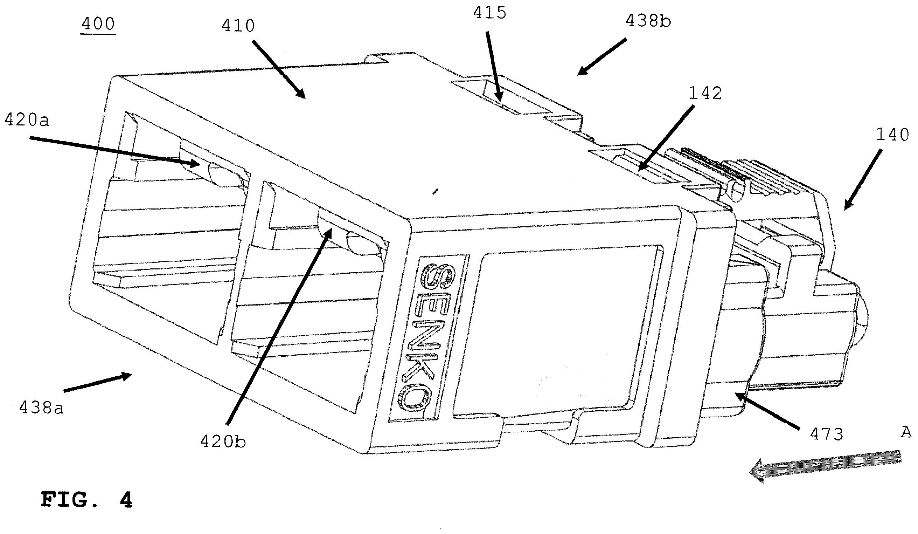

FIG. 4 is a side perspective view of adapter of FIG. 2A with the multi-fiber optic ferrule connector of FIG. 1F inserted at a second end in direction of arrow "A";

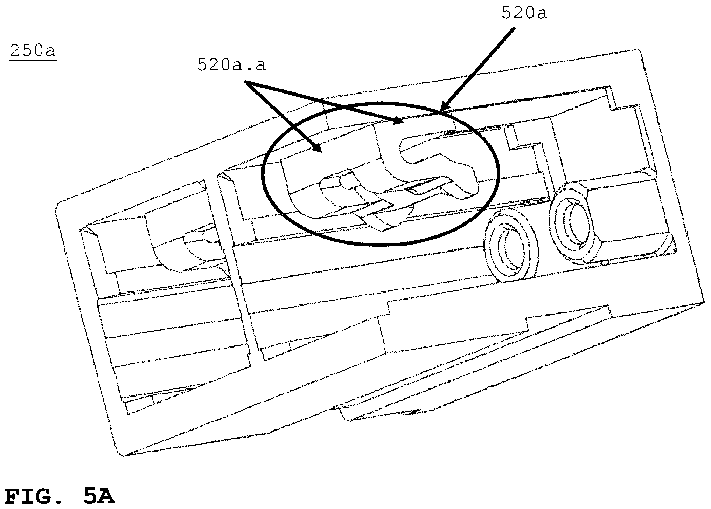

FIG. 5A is a cross-sectional perspective front view from a plane cutting along B-B' of FIG. 2B illustrating engagement device molded into inner adapter housing;

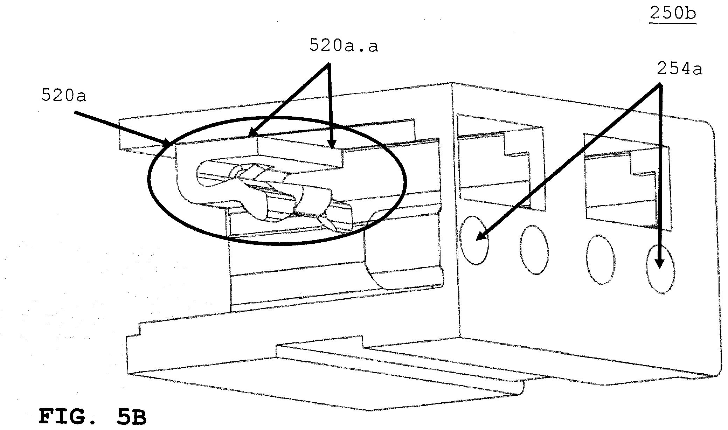

FIG. 5B is a cross-sectional perspective view from a plane cutting along B-B' of FIG. 2B illustrating engagement device molded into inner adapter housing at a distal end of first body portion of adapter FIG. 2A;

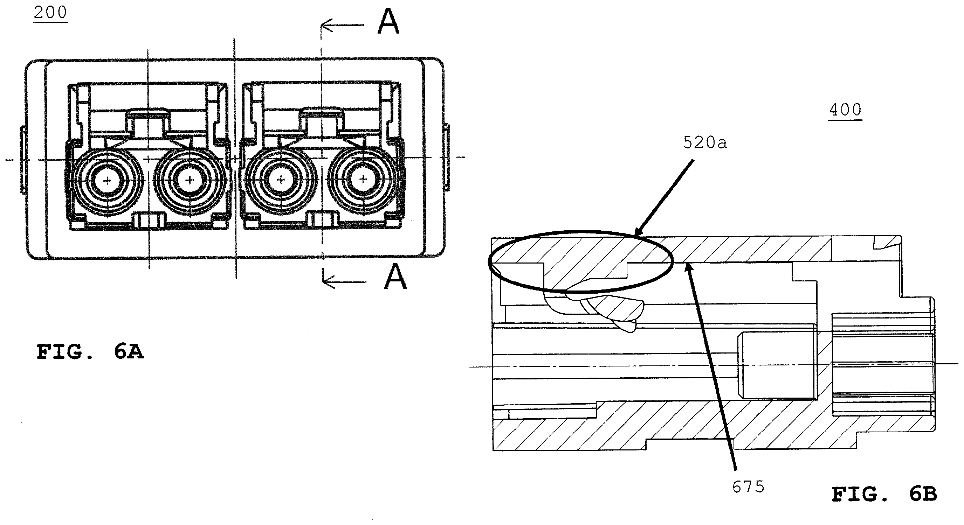

FIG. 6A is a perspective front view of adapter of FIG. 2A with a cross section A-A in a receptacle of the adapter;
FIG. 6B is a cross section view along plane A-A of FIG. 6A without a multi-fiber optic connector of FIG. 1E.1 inserted therein;

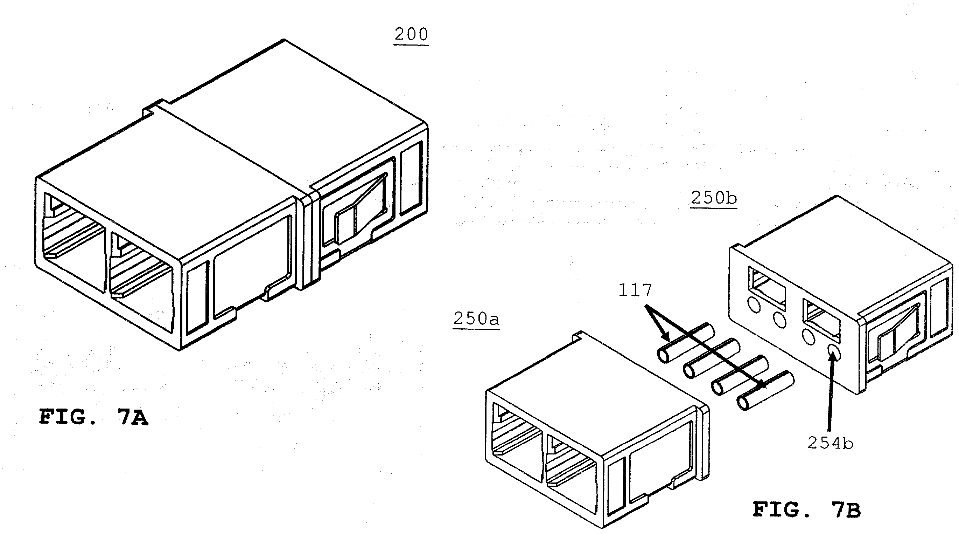

FIG. 7A is a perspective view of the adapter of FIG. 2A without integrated engagement device in each adapter receptacle;
FIG. 7B is an exploded view of FIG. 7A;

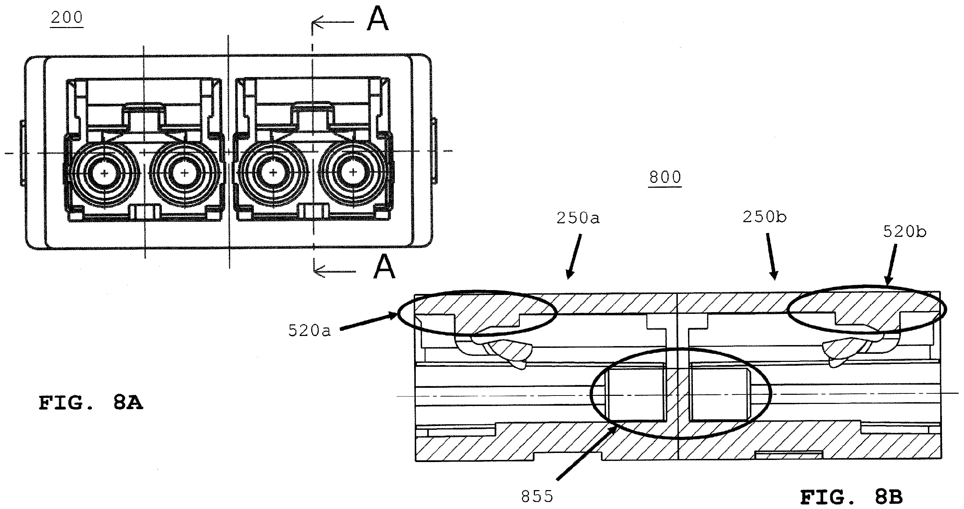

FIG. 8A is a perspective front view of adapter of FIG. 2A with a cross section A-A at a center-line of receptacle of adapter;
FIG. 8B is a cross section perspective view along plane A-A of FIG. 8A with integrated engagement devices at opposing ends of adapter;

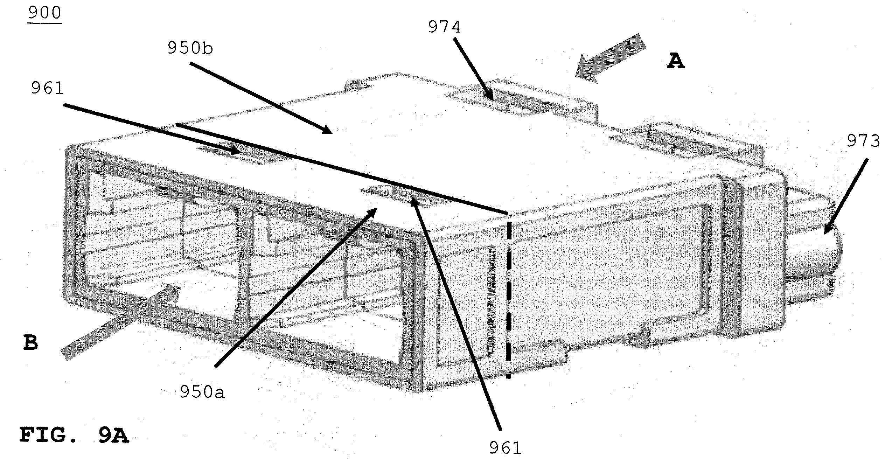

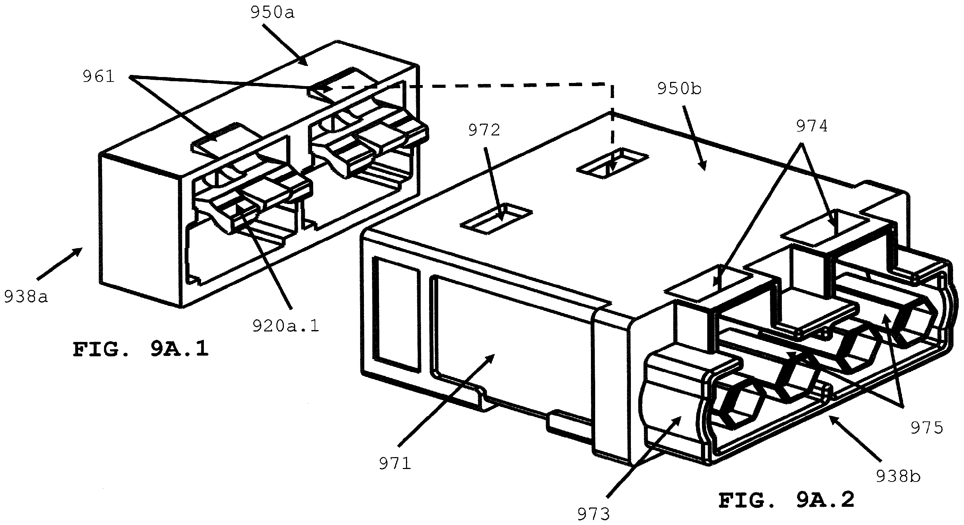

FIG. 9A is a perspective view of another embodiment of multi-body adapter with integrated engagement devices;
FIG. 9A.1 is a perspective back inside view of a first portion of a multi-body adapter with integrated engagement device in each receptacle;
FIG. 9A.2 is a perspective rear view of a second portion of multi-body adapter of FIG. 9A.1;

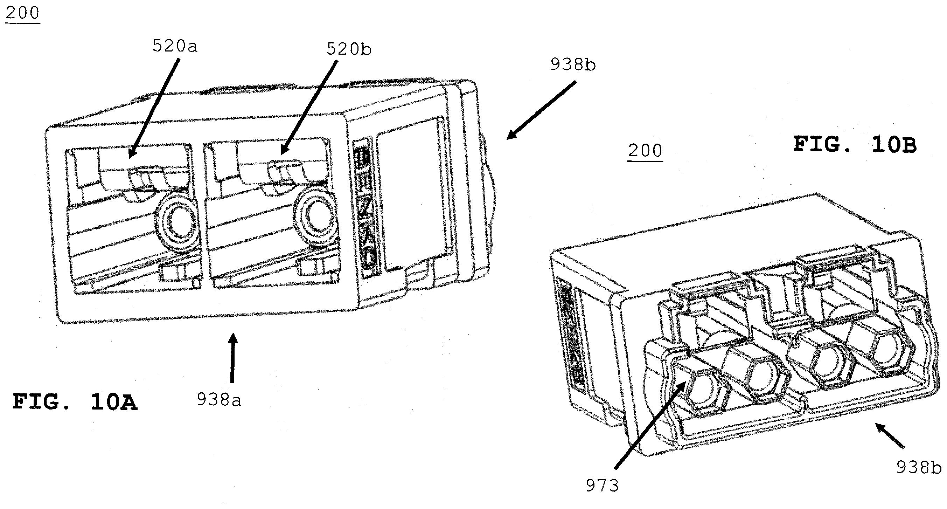

FIG. 10A is a front perspective angled view of a first body portion of the multi-body adapter of FIG. 2A;
FIG. 10B is a rear perspective angled view of a second body portion of the multi-body adapter of FIG. 2A;

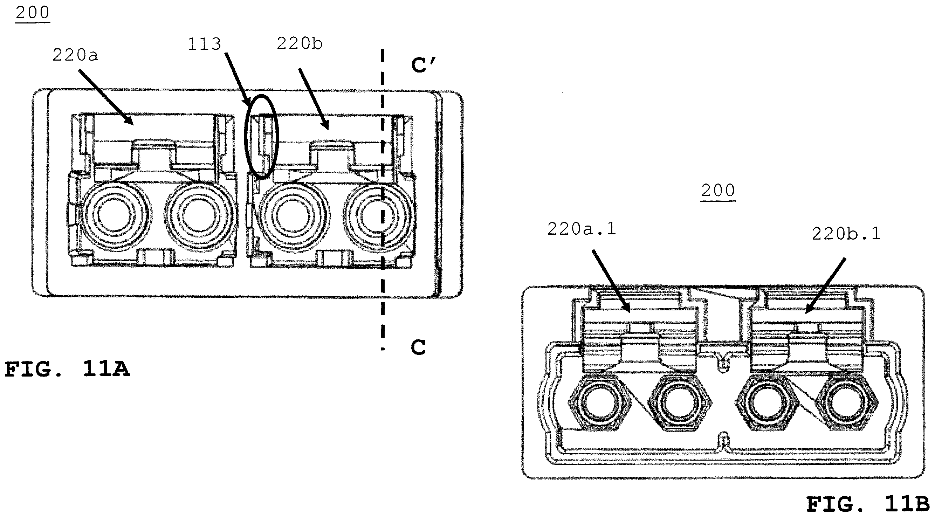

FIG. 11A is a front perspective view of a first body portion of the multi-body adapter of FIG. 2A with a cross section plane at C-C';
FIG. 11B is a rear perspective view of a second body portion of the multi-body portion of FIG. 2A;

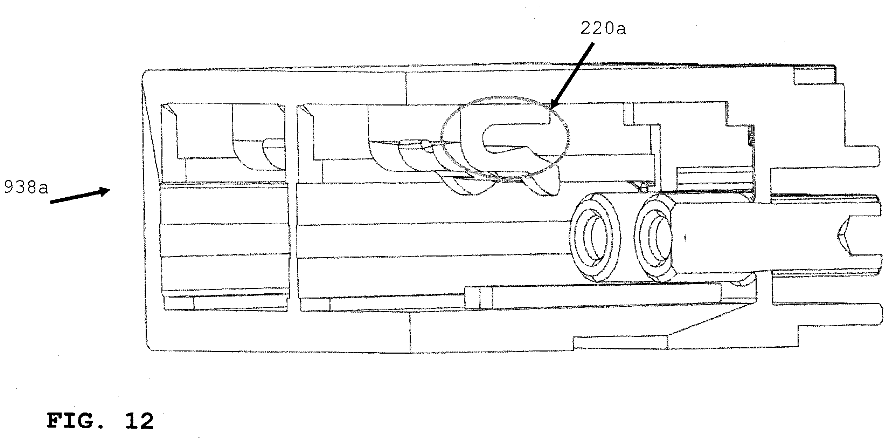

FIG. 12 is a cross-sectional perspective angled front view along plane C-C' of FIG. 11A;

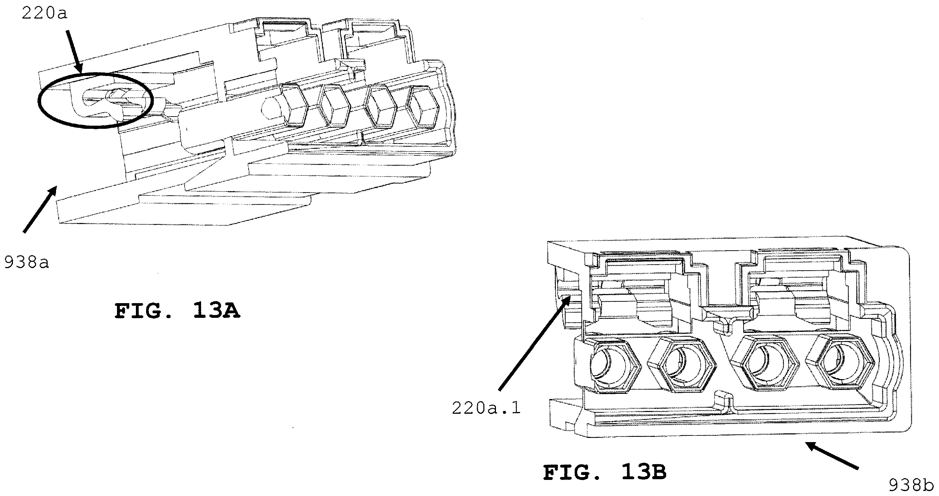

FIG. 13A is an angled cross-sectional rear view along plane C-C' of FIG. 11A;
FIG. 13B is a rear view of cross-sectional view along plane C-C' of FIG. 11A;

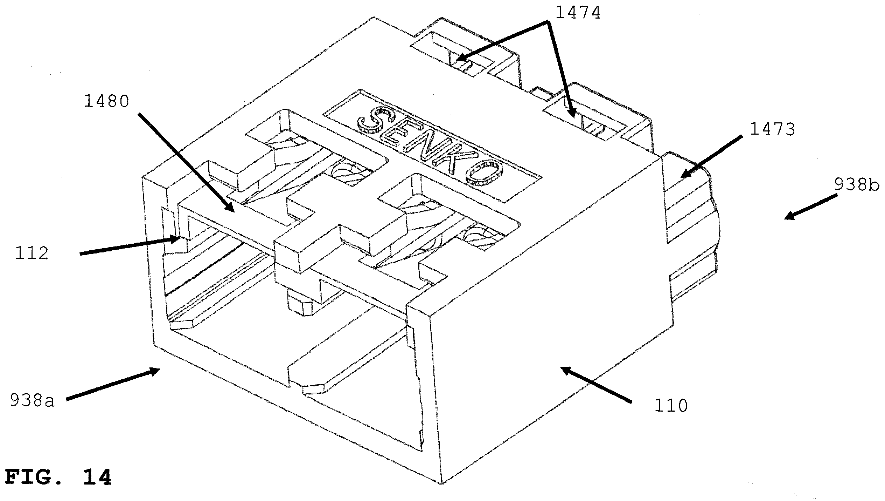

FIG. 14 is front perspective view of adapter with another embodiment, not part of the claimed invention, of unitary engagement device therein;

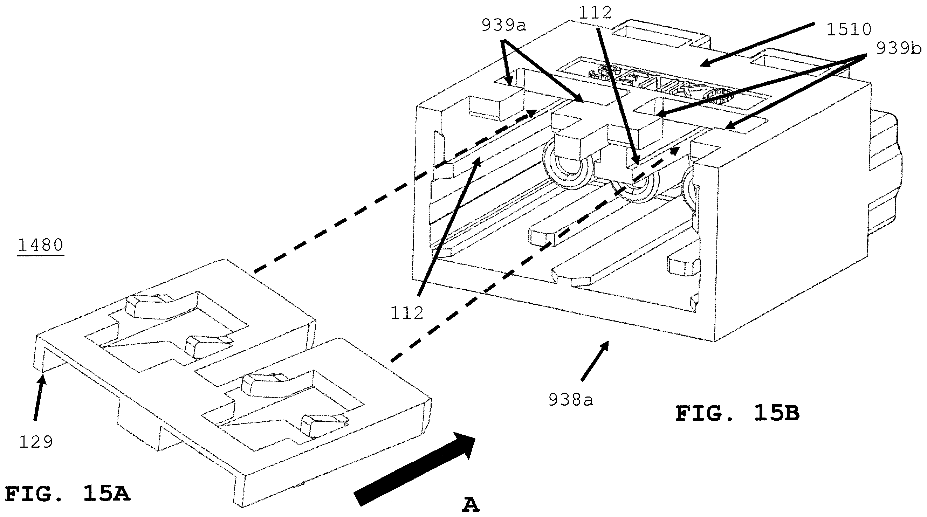

FIG. 15A is perspective view of unitary engagement device of FIG. 14;
FIG. 15B is a perspective front view of the adapter of FIG. 14 prior to insertion of unitary engagement device of FIG. 15A;

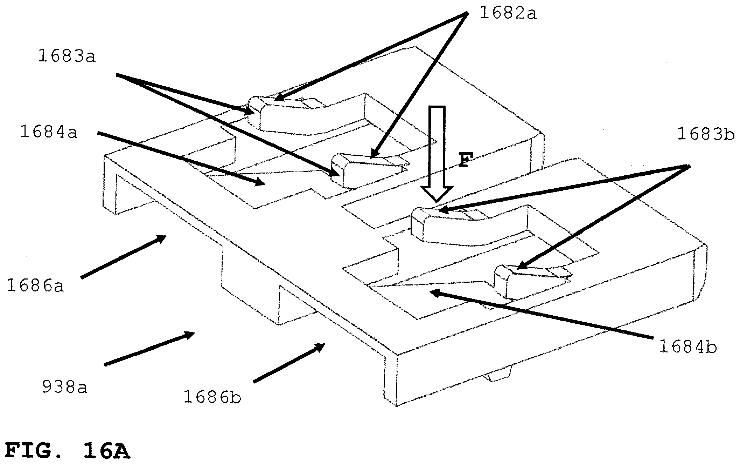

FIG. 16A is a perspective view of the engagement device of FIG. 15A showing operation of protrusions under a force "F" created by insertion into an adapter receptacle;

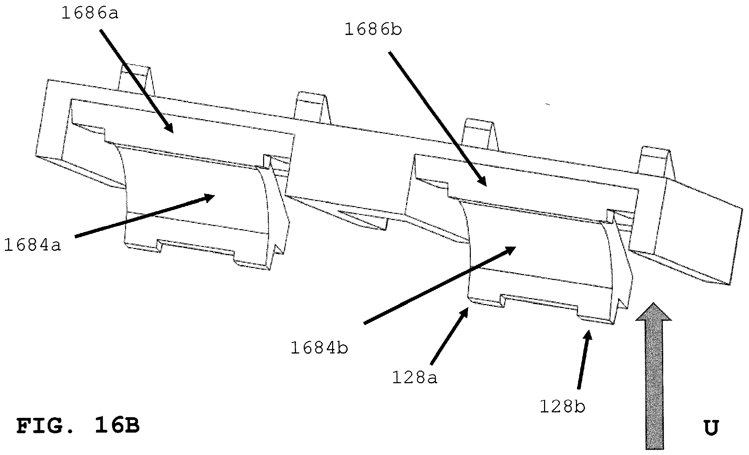

FIG. 16B is a perspective view of bottom of the engagement device of FIG. 15A;

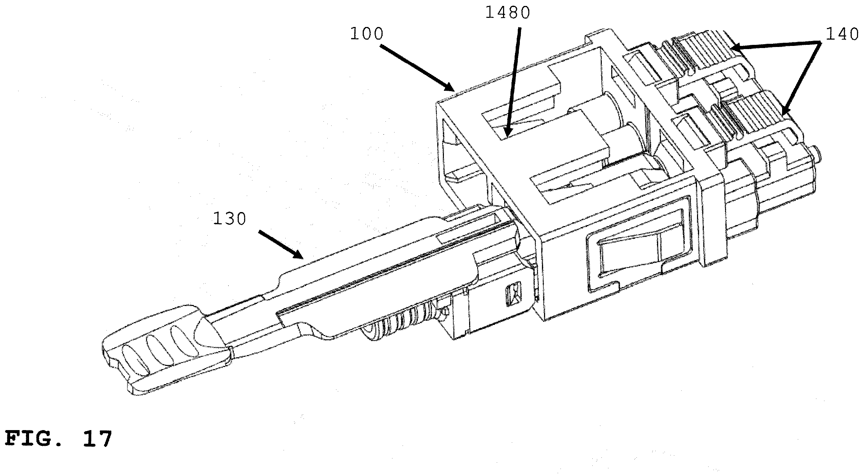

FIG. 17 is a perspective view of the adapter of FIG. 14 with engagement device of FIG. 16 at first end with a multi-fiber optic connector of FIG. 1E.1 inserted at the first end and multi-fiber optic ferrule connector of FIG. 1F at a second end;

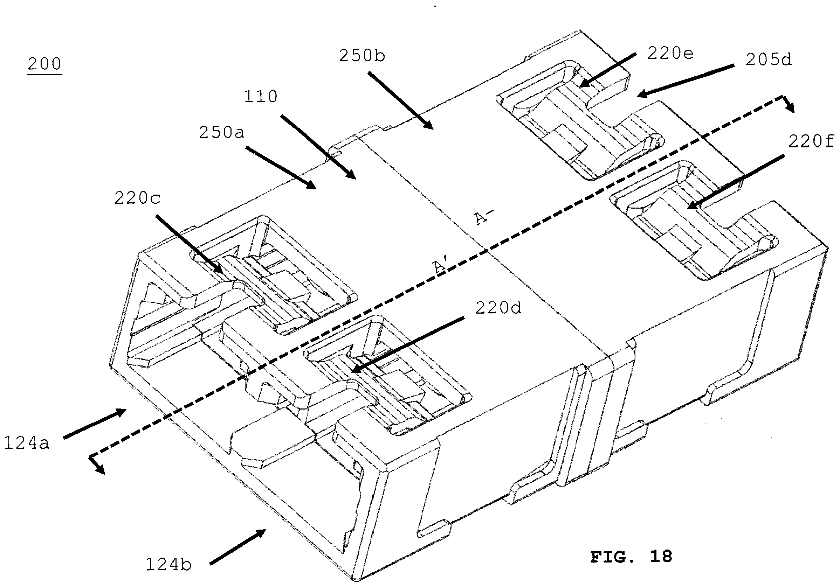

FIG. 18 is a perspective view of another embodiment, part of the claimed invention, of an adapter with integrated engagement devices;

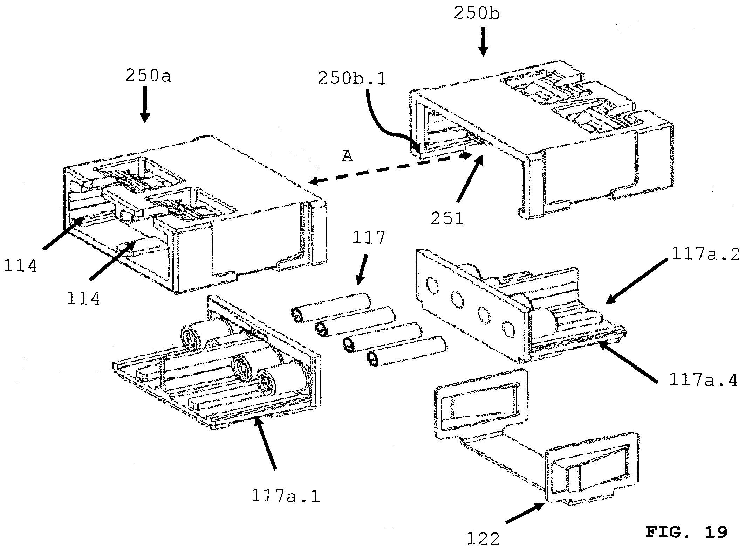

FIG. 19 is an exploded view of FIG. 18;

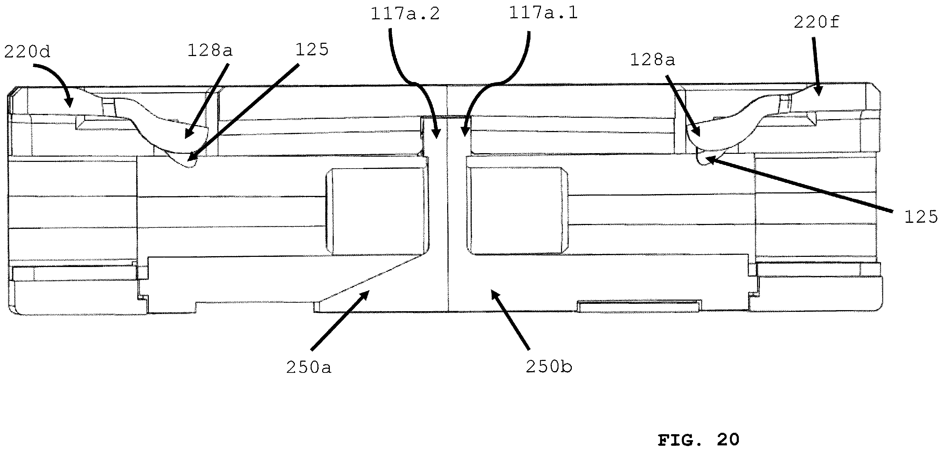

FIG. 20 is a cross-section view along A-A' of FIG. 18;

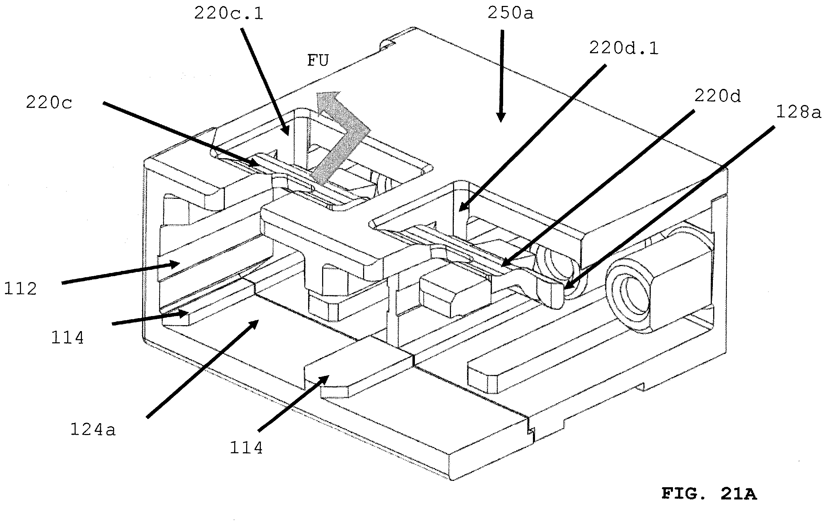

FIG. 21A is a front view of front body portion of FIG. 18 adapter with cut-away view at a receptacle port;

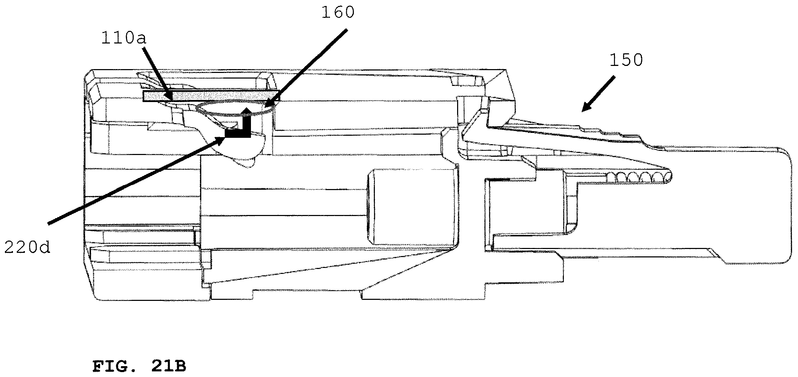

FIG. 21B is a front view of front body portion of FIG. 18 adapter with a closed housing and a gap to accept a flexed engagement device;

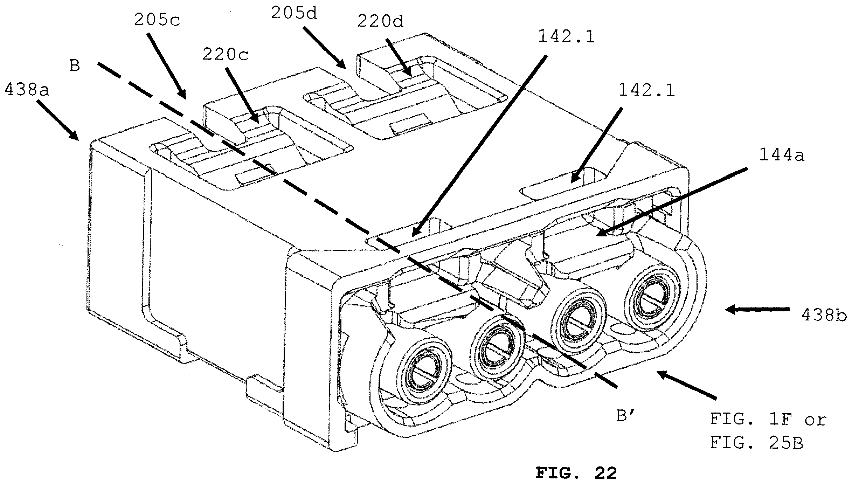

FIG. 22 is back-view of FIG. 18 front portion and back portion replaced with behind-the-wall receptacle ports;

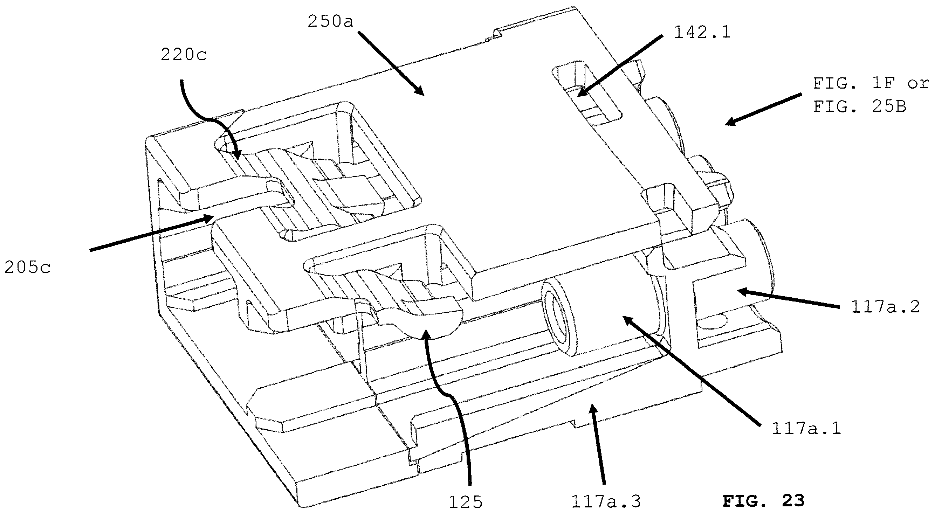

FIG. 23 is a side view with cut-out view of FIG. 22;

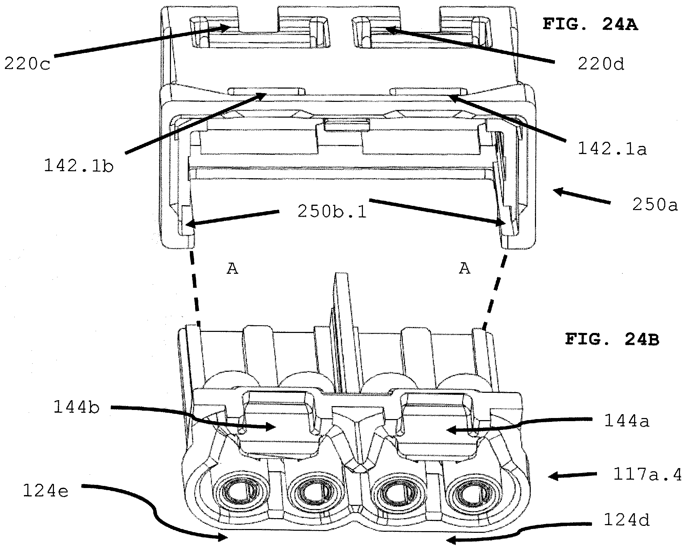

FIG. 24A is a perspective back view of back potion without the alignment sleeve assembly of FIG. 24B inserted therein;
FIG. 24B is a perspective view of an alignment sleeve assembly;

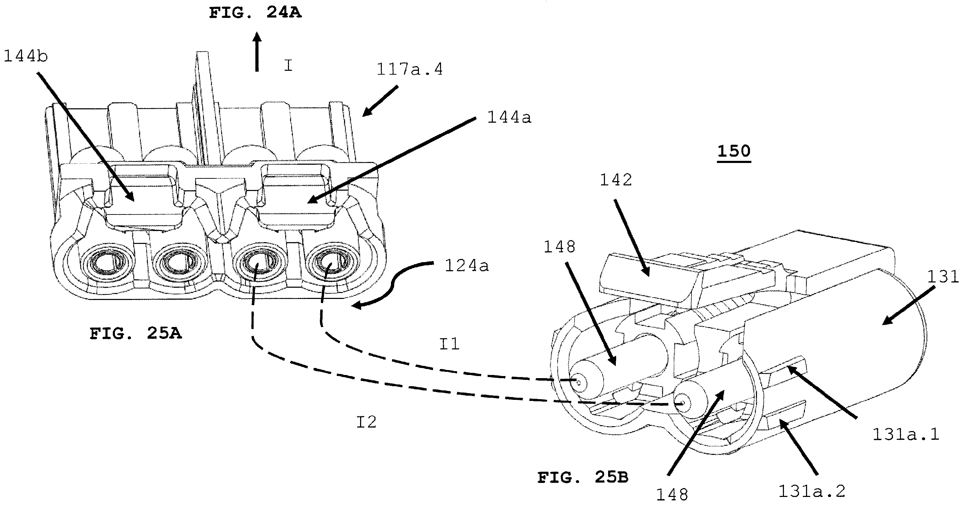

FIG. 25A is FIG. 25B;
FIG. 25B is a perspective view of a behind-the-wall connector similar of FIG. 1F;

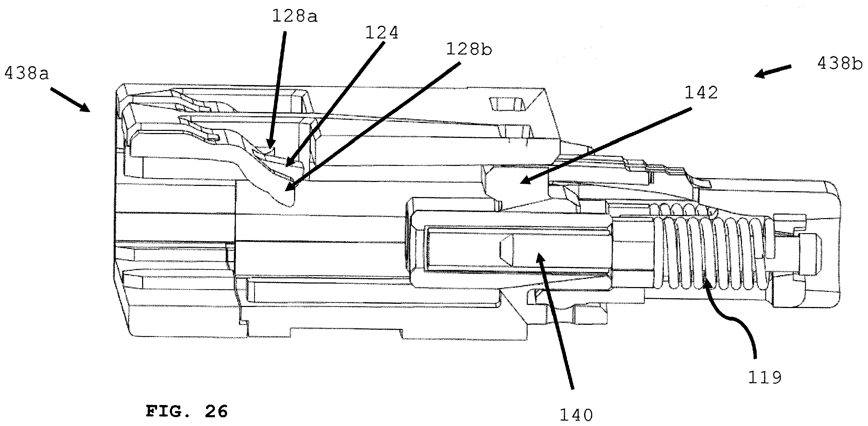

FIG. 26 is a cross-section of FIG. 25B inserted into FIG. 23 or FIG. 24B;

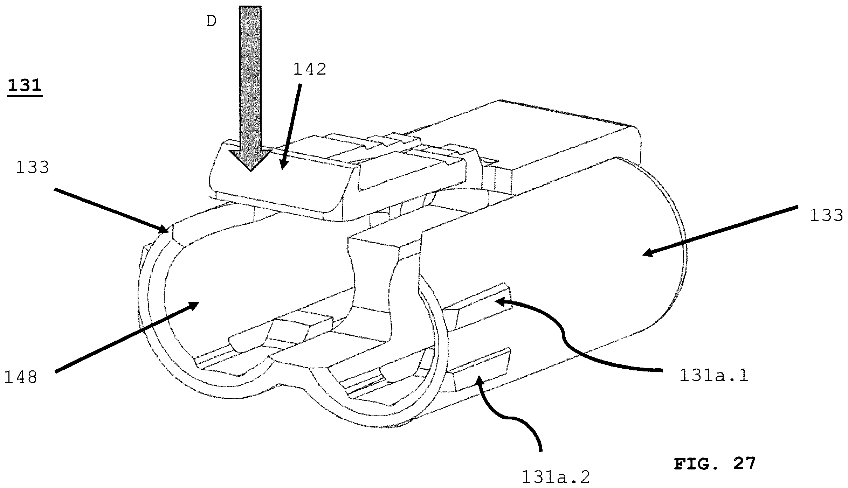

FIG. 27 is a perspective view of the outer housing of the connector of FIG. 25B;

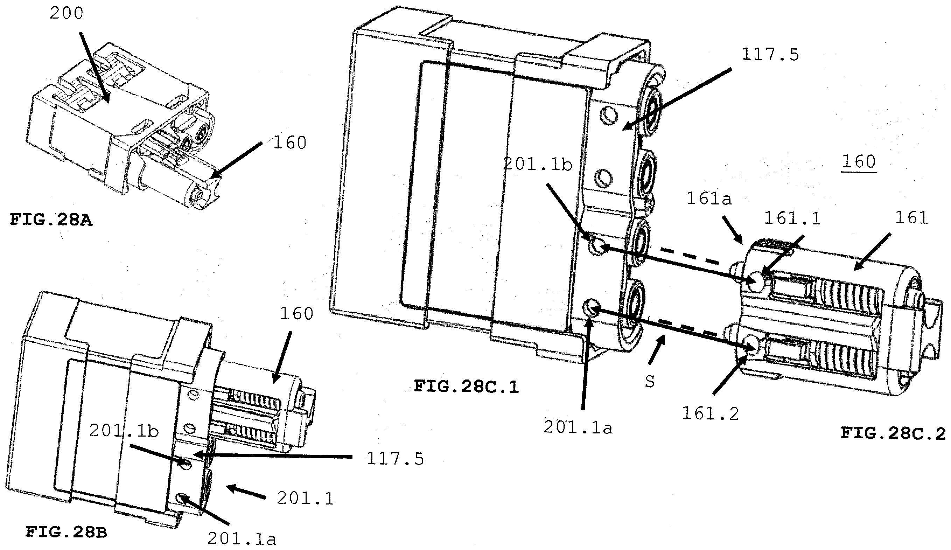

FIG. 28A is a perspective view of an adapter with a behind-the-wall connector therein;
FIG. 28B is a bottom view of FIG. 28A;
FIG. 28C.1 is a view of adapter of FIG. 28B;
FIG. 28C.2 is a bottom view of a behind-the-wall connector;

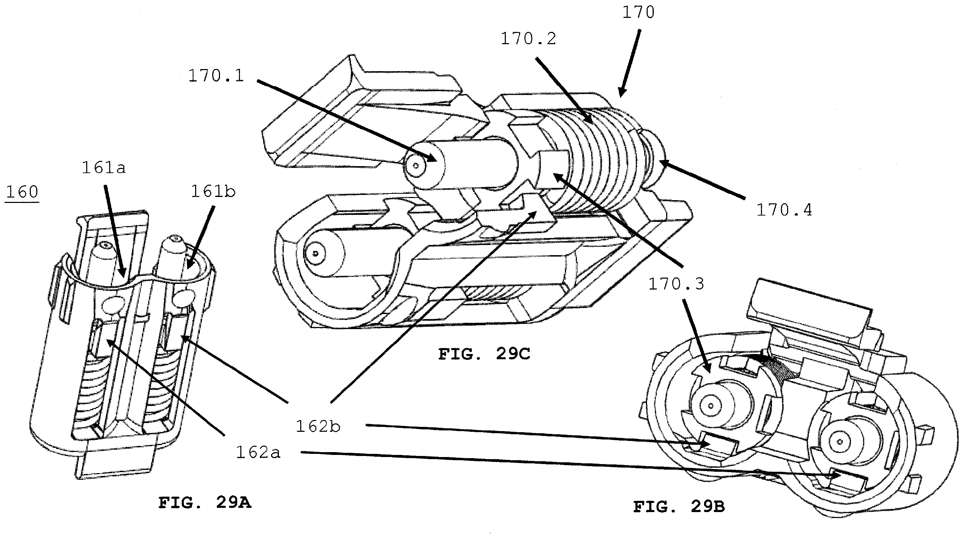

FIG. 29A is a bottom, angled view of the connector of FIG. 28C.2;
FIG. 29B is the front view of the connector of FIG. 28C.2;
FIG. 29C is a bottom view with exposed ferrule assembly of the connector of FIG. 28C.2;

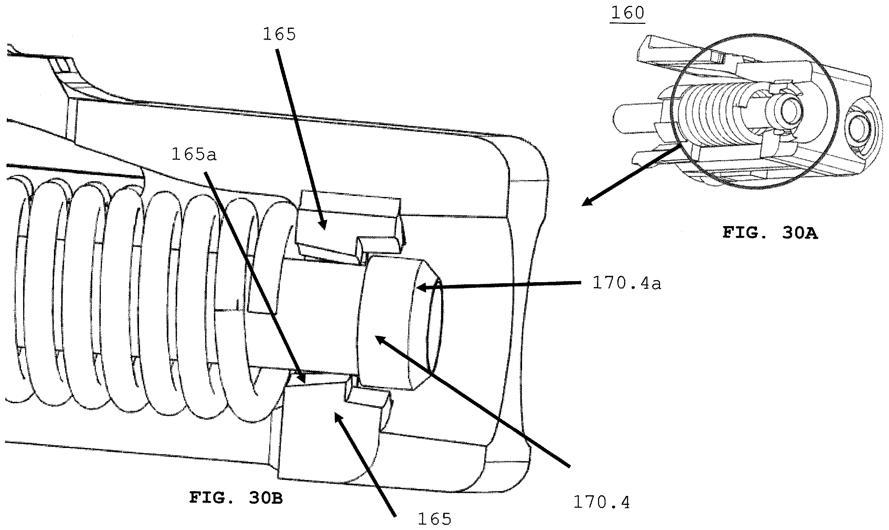

FIG. 30A is a side cut-away view of the connector of FIG. 29C.2 showing ferrule assembly;
FIG. 30B is a zoomed view of FIG. 30A at ferrule assembly.

### Detailed Description

In the following description, apparatuses for mating opposing multi-fiber optic connectors of differing types or the same type are set forth as preferred examples. The mating structure includes an engagement device that may be removable/replaceable within a receptacle, or integrated or permanently secure within a receptacle, both devices configure to mate with and secure a proximal end of a fiber optic connector therein. It will be apparent to those skilled in the art that modifications, including additions and/or substitutions may be made without departing from the scope of the invention as defined in the claims. Specific details may be omitted so as not to obscure the invention; however, the disclosure is written to enable one skilled in the art to practice the teachings herein without undue experimentation.

FIG. 1A depicts an embodiment, not part of the claimed invention, of a fiber optic adapter 100 with an engagement device 120 inserted into a receptacle 124 of adapter 100. Referring to FIG. 1A.1, engagement device has openings 122. The openings provide stress relief as the engagement device radius 120 reverses a plural of legs (125, 128a, 128b). A proximal end of connector 130 has widthwise recess 132, that accepts device legs (128a, 128b). Once the legs are in the recess, an attempt to pull the connector out of the adapter receptacle, the legs are captured in the recess. This capture prevents an unintended removal of connector unless operator pulls on push/pull tab as described herein. The recess is formed is shaped as a groove with a width to accept arm thickness. Upon pulling on the connector, not the push-pull tab, the legs resist removal of the connector. The legs retain a connector by providing an opposing force when positioned within the recess 132.

Referring to FIG. 1A.2, a zoomed portion of adapter outer housing 110 cutouts illustrates contact surfaces that securing points 126 engage with to retain device 120 within an adapter or transceiver receptacle port. Cutout 116 on device 120 upper surface receives corresponding adapter housing structure. Referring toFIGS. 1B.1 and 1C.1, the legs (128a, 128b) engage a corresponding widthwise recess 132 on a surface of a proximal end 146a of a push/pull connector 130, as shown as FIG. 1E.2. FIG. 1B.1 depicts an embodiment not part of the claimed invention of a removable, replaceable engagement device 102a. FIG. 1C.1 depicts another embodiment of a removable, replaceable engagement device 102b. The aforementioned engagement devices (102a, 102b) are an integrated, not removable, part of the receptacle of an adapter in the present invention.

Referring to FIG. 1E.2, proximal end 146a is nearer ferrule 148. Distal end 146b is nearer a boot. Referring to FIG. 1A.2, adapter housing 110 shows engagement device 102 inserted into a receptacle. The cross-section depicts engagement device securing points 126 that engage adapter housing to prevent movement upon inserting and removing a connector (not shown). Referring to FIGS. 1B.1-1C.1, engagement device securing points 126 engage opposing surfaces within adapter receptacle housing to secure engagement device therein as shown. Referring to FIG. 1B.2 and FIG. 1C.2, engagement device guide rails 129 are supported by inner rail support 112 within adapter receptacle 124, upon insertion of engagement device into receptacle port 124.

Referring to FIG. 1E.1, push/pull multi-fiber optic connector 130, with pull tab 139, allows a user to release connector from receptacle by pulling on tab 139 in direction "P". To secure connector in a receptacle, engagement device (102a, 102b) is activated upon insertion of a proximal end of the connector into the receptacle. Referring to FIG. 1B.1, middle arm 125 contacts ramp 134 (refer to FIG. 1E.2), as middle arm is raised a pair of outer arms or legs (128a, 128b) are raised. As connector is further inserted into receptacle, outer arm tension is released and outer arms drop into are retained within a widthwise recess 132 at a proximal end of connector. This secures or latches connector into adapter receptacle. Once secured, engagement device prevents longitudinal movement of a multi-fiber optic connector along longitudinal axis, from a first end to a second end of fiber optic adapter 100 inside a receptacle. This is the same operation for device 102a, FIG. 1B.1 and also occurs for device 102b, FIG. 1C.1.

FIG. 1F depicts a perspective view of an alternative fiber optic connector 140. Connector 140 is inserted in a second end of adapter 100 without an engagement device 102. Referring to FIGS. 1F and 4, a latch 142 is depressed and seats within an adapter housing opening 415 to secure connector 140 in adapter receptacle. Referring to FIG. 1F, connector housing 144 mates with a shroud 473 to align connector 140 into adapter receptacle that allows latch 142 to be secured within opening 415. Refer to FIG. 9A for similar operation.

Referring to FIG. 1D, the adapter 100 is assembled in the direction of arrow "A". Alignment sleeves 117 are inserted into adapter housing between a first and a second end. Alignment sleeve holder or assembly 117a accepts one end of alignment sleeve, and alignment sleeve holder 117a is secured within corresponding adapter structure housing 110. Integrated engagement devices (220a, 220b) may be molded as one integrated piece into an adapter receptacle inner housing structure, as depicted in FIG. 2A and FIG. 18. Without departing from the scope of the invention, integrated engagement device maybe secured to any surface of an adapter housing. Replaceable engagement devices (102a, 102b) are configured with outer structure (e.g. securing points 126) to secure within corresponding adapter housing structure.

FIG. 2A shows an alternative adapter 200 that comprises first body portion 250a and second body portion 250b. Referring to FIG. 2B, the first body portion comprises engagement device (220a, 220b) respectively in each receptacle port at a first end. Referring to FIG. 2C, the second body portion 250b comprises a plural of alignment sleeve openings 254b at a first end. Openings 254b accept a corresponding alignment sleeve 117 (refer to FIG. 1D). Referring to FIG. 7B, sleeve 117 at a first end engages an opening at a second end of first body portion 250a. Upon pushing together first and second body portion, a plural of alignment sleeves 117 secure first body portion 250a and second body portion 250b together to form adapter 200, as shown in FIG. 7A.

Referring FIG. 2A, adapter 200 comprises front portion or first body portion 250a and back portion or second body portion 250b, each adapter opening or receptacle includes an integrated engagement device (220a, 220b), the opening further comprises plural of rails 114 and channels 112 that mate with corresponding structure at an outer housing 136 (FIG. 1E.2) of connector 130. The receptacle further includes rail support 114 that acceptsguide rail 129 (refer to FIG. 1C.1 or FIG. 1B.1) located on an engagement device 102a, 102b. Referring to FIG. 2B, cross section B-B' is shown in FIG. 5A and FIG. 5B.

Referring to FIG. 2B.1, a front view of adapter 200 shows engagement device (220a, 220b) integrated with adapter inner housing 675 (FIG. 6B). Integrated engagement device (220a, 220b) does not use support channels 112 and rails 114. Neither engagement devices (220a, 220b) occupy the same space as replaceable version used within adapter 100. Integrating an engagement device reduces any longitudinal movement of the ferrules, which reduces signal loss, reduces engagement device breakage, reduces manufacturing costs because it is a one-piece design, and helps ensure alignment of connector 130 within receptacle. Adapters and transceiver receptacles are becoming more compact and smaller, and molding one-piece devices is critical to this success.

FIG. 3 shows a plural of alignment sleeve openings 254a that accept a corresponding alignment sleeve which connect the two body portions together. A rear view of engagement devices (220a.1, 220b.1) are shown in an adapter receptacle of second body portion or back body portion 250b. FIG. 4 comprises integrated engagement device in each receptacle at first end 438a, and connector 140 inserted at second end 438b of single body adapter. First end 438a receptacle can accept connector 130. Second end 438b receptacle can accept second connector 140 inserted in direction of arrow "A". Adapter housing 410 has an opening 415 that accepts latch 142 located at outer housing of connector 140. Integrated engagement devices (420a, 420b) can accept connector 130. This is similarly disclosed in FIG. 9A.1 and FIG. 9A.2.

FIG. 5A is cross-sectional B-B' of first body portion or front body portion 250a depicting integrated engagement device 520a, which is a molded as one piece within the inner housing as shown along sides 520a.a of engagement device 520a, to inner surface 675 (refer to FIG. 6B) of adapter housing 110. Referring to FIG. 5B, cross-sectional B-B' of the first body portion 250a depicts integrated engagement device 520a, which is molded as one-piece within inner adapter housing as shown along sides 502a.2 of engagement device 520a, to inner surface 675 of adapter housing 110. The corresponding alignment sleeve openings 254a at a distal end of first body portion accept an end of alignment sleeves 117 to secure first and second body portion as a single adapter. A second end of alignment sleeves 117 are accepted into corresponding alignment sleeve openings 254b. The two portions are pushed together along a longitudinal axis of alignment sleeves 117 to secure first and second body portions together. Engagement device 102 may be ultrasonic welded to an inner housing of the adapter without departing from the scope of the invention.

FIG. 6A is a front view of adapter 200 with a cross-section along A-A along a longitudinal axis from a first end to a second end of an adapter or transceiver receptacle. FIG. 6B is a cross-section along A-A shows the engagement device 520a molded as part of inner housing 675 of adapter 400 at a first end, as shown in cross-section. FIG. 8A is a front view of adapter 200 as shown in FIG. 6A. FIG. 8B is a cross-section along A-A integrated engagement devices (520a, 520b) molded as part of inner housing 675 of adapter 200 at either end, as shown at cross-section. The alignment sleeve 855 secures first body portion 250a and second body portion 250b to form adapter 800.

FIG. 9A depicts another embodiment of two-piece adapter 900. First body portion 950a detaches via latches 961 from second body portion 950b. Connector 130 is inserted in direction of arrow "A", and connector 140 is inserted in direction of arrow "B". This embodiment replaces the alignment sleeves securing the two body portions, as shown in FIG. 7B, with one or more latches 961. FIG. 9A.1 depicts first body portion 950a removed from second body portion 950b, FIG. 9A.2. A pair of latches 961 are secured in openings 972 when first body portion is pushed into second body portion along direction of the dashed arrow. The second body portion can accept connector 140 within shroud 937, at second end 938b of assembled adapter. Connector 140 ferrule openings 147, FIG. 1F, engage alignment sleeve holders 975 and outer housing 144 engages inner housing of shroud 937. This aligns connector 140, so latch 142 is accepted into opening 974, and secures connector 140 into adapter receptacle. First end 938a accepts connector 130, and as a result of the above description two different connectors are in communication along a longitudinal axis of adapter 900.

Referring to FIG. 10A, adapter 200 shows engagement devices (520a, 520b) in respective receptacles at first end 938a. FIG. 10B is a rear view of second end of second body portion showing corresponding structure that can mate with connector 140. FIG 11A depicts front view of adapter 200 showing gap 113 (also refer to FIG. 2B.1) as extra space within adapter housing when using integrated adapter devices (220a, 220b), and cross section along C-C' depicted in FIGS. 12-13B. The additional space maybe used to increase material thickness to improve adapter durability, or reduce adapter size to correspond to future size reductions in connectors.

FIG. 11B depicts a distal end of engagement devices (220a.1, 220b.1) as seen along longitudinal axis of adapter 200. The longitudinal axis is from a first end to a second end along bi-directional arrow "A" of FIG. 2A. FIG. 12 depicts engagement device 120 molded into adapter inner housing, as shown in call-out 220a, at first end 938a of first body portion. FIG. 13A depicts engagement device 220a molded into adapter housing as viewed from its distal end. FIG. 13B depicts engagement device molded into inner housing as viewed from backside of engagement device 220a.1 of adapter at second end 938b of adapter.

In an embodiment not part of the claimed invention, FIG. 14 depicts a single housing adapter with a unitary engagement device removable and replaceable within first end 938a of adapter. Second end 938b is configured to accept connector 140, with latch 142 being accepted into openings 1474 to secure connector with shroud 1473, thereby establishing a communication path from a second end to a first end of adapter. Second end 938a can be configured to accept the unitary device 1480, while the first end is configured to accept connector 130. Also, first end and second end can both accept unitary device 1480, as shown in FIG. 8B that has engagement device (220a, 220b), molded as part of adapter inner housing at either end of adapter.

FIG. 15A depicts unitary engagement device 1480 prior to insertion into a first end of adapter housing 1510 (refer to FIG. 15B). As with replaceable engagement device 102a, guide rails 129 are aligned with and accepted by rail support 112 within a receptacle, as shown by dotted arrow (refer to FIG. 15B). Referring to FIG. 16A, the unitary engagement device further comprises a plural of flexible latches (1683a, 1683b) for each engagement device. A single latch maybe provided to secure device 1480 within an adapter receptacle. Upon insertion of unitary device 1480 into one end of adapter as shown in direction of arrow "A", FIG. 15A, face 1682a of latch pair 1683a engages adapter inner housing, and latches 1683a and 1683b are pushed down in arrow direction "F". Upon complete insertion, latch pair (1683a, 1683b) secures unitary engagement device via adapter housing openings (939a, 939b) respectively. Upon insertion of connector 130 into a receptacle of adapter, widthwise recess 132 accepts flexible tab (1684a or 1684b) and connector 130 is secured within a receptacle port. Proximal end of connector 130 is placed within openings (1686a, 1686b). Referring to FIG. 16B, connector 130 is inserted into opening 1686b. The proximal end raises flexible tab 1684b, and arms (128a, 128b) are seated in widthwise recess 132 to secure connector 130 within adapter. To release connector 130, push/pull tab is pulled rearward, and middle arm 125 lifts flexible tab upward, in direction of arrow "U", removing arms from widthwise recess 132, so connector 130 can be removed.

FIG 17 depicts connector 130 secured in first end of adapter 140 and connector 140 secured in second end of adapter 140. A two-piece adapter 200 maybe used without departing from the scope of the invention. The unitary engagement device 1480 is inserted into a first end of first body portion, or a first end contains corresponding integrated engagement devices (220a, 220b).

FIG. 18 depicts another embodiment of an adapter 200 with housing 110 comprising one or more an integrated engagement device (220c-220f) molded into each receptacle port (124a-124d) of the adapter housing. Engagement device (220c-220f) is similar to engagement devices of FIGs. 1B.1-1C.2. Engagement devices (220c-220f) have two outer arms (128a, 128b) and middle arm 125 as described above in FIGs. 1B.1-1C.2. Although molded, as depicted in FIG. 18, the outer arms and middle arm operate as described above whena fiber optic connector 130, as depicted in FIG. 1E.2 is inserted into one of the receptacle ports (124a-124d). Operation of fiber optic connector 130 is described at FIG. 1E.1 above. Referring to FIG. 18, adapter housing 110 further comprises front portion 250a and back portion 250b. As depicted front portion 250a has two or more receptacle ports (124a, 124b), however the front portion may have one receptacle port with an engagement device molded therein without departing from the scope of the invention. At first end 438a, receptacle ports have rails 114 for supporting and aligning fiber optic connector 130 within receptacle port 124a or receptacle port 124b. Not shown at second end 438b, are rails 114 performing the same function. FIG. 18 also differs from embodiment of FIG. 5B where engagement device 220c flexes through opening 220c.1 of FIG. 21A or stays within a gap or recess formed in adapter wall as depicted in FIG. 21B.

FIG. 19 depicts an exploded view of FIG. 18 adapter 200 with front body portion 250a offset from back body portion 250b. Back body portion 250b further comprises latch 251 that is secured into front body portion 250a along arrow A. Alignment sleeve holders (117a.1, 117a.2) according to a second embodiment, as depicted in FIG. 19, comprise alignment sleeve holder assembly 117a of FIG. 1D, molded as part of a bottom side of front body portion 250a and alignment sleeve holder assembly 117a.2 as part of bottom side of back body portion 250b. As described above alignment sleeves 117 interconnect front body portion 250a and back portion 250b thereby forming adapter 200. Alignment sleeve holder 117a.1 further comprises U-Channel surface 117a.4 lengthwise along an outer side of sleeve holder. U-Channel surface 117a.4 is accepted and supported by lip or ledge 250b.1 that runs lengthwise along a side of back body portion to form back portion as depicted in FIG. 20. Alignment sleeve holder 117a.2 is similar structure to 117a.2. Panel bracket 122 is secured about a recess in adapter housing for mounting the adapter within a patch panel as is known in the art.

FIG. 20 depicts cross-section of FIG. 18, along line A-A, with front body portion 250a and back portion 205b secured together with alignment sleeves. A portion of alignment sleeve 117 is secured within alignment sleeve holder 117a.1 and portion of alignment sleeve 117 is secured within alignment sleeve holder 117a.2 thereby securing front portion and back portion to form adapter 200. Still referring to FIG. 20, front body portion 250a shows molded engagement device 220d with outer arm 128a and middle arm 125. Middle arm 125 is slightly below outer arms 128a, 128b) and the arms are interconnected, and operate as described above in FIG. 1E.1. Likewise back body portion 250b shows engagement device 220f and outer arm 128a and middle arm 125.

FIG. 21A depicts a cut-out view at receptacle port 124b of FIG. 18, where integrated engagement device middle arm 125 is shown. In operation upon insertion of fiber optic connector 130 into receptacle port 124a, engagement device 220d rotates up or flexes up in direction of arrow "FU" into opening 220d.1 formed within adapter housing 110. Engagement device 220c also flexes into opening 220c.1, in direction of arrow "FU", upon insertion of a fiber optic connector within receptacle port 124a.

FIG. 21B depicts recess 160 within adapter inner housing whereby engagement device 220d flexes into upon insertion of fiber optic connector 130 into receptacle port 124b. A closed outer housing, 110a, reduces debris ingress into the adapter, which can interfere with the signal within the fiber optic connector emitting as light from an optical fiber embedded in the ferrule of the connector.

FIG. 22 depicts an adapter with first end 438a comprising one or more engagement devices (220c, 220d) molded into a receptacle port, similar to front body portion 250a of FIG. 18, and alignment key slots (205c, 205d) that accepts a protrusion or alignment key on an outer surface of a fiber optic connector. The connector alignment key and key slot 205 orient the fiber optic connector in the receptacle port. Second end 438b depicts a behind-the-wall receptacle ports with latch recess 142.1 that accepts latch 142 (refer to FIG. 25B) and latch receiving surface 144a that applies an opposite force to latch 142, to prevent latch 142 form being dislodged from recess 142.1 during normal operation.

FIG. 23 depicts cut-out view along line B-B' of the adapter of FIG. 22, along front end 438a and back end 438b. Front end 438a depicts FIG. 18 with integrated engagement devices (220c, 220d) molded into each respective receptacle port. Second end 438b depicts another embodiment of alignment sleeve holder 117a.3 but is a molded one-piece instead of two separate alignment sleeve holders (117a.1, 117a.2) molded together. Alignment sleeve holders (117a.1, 117a.2) are molded as part of alignment sleeve holder body 117a.3. Second end 438b can accept a fiber optic connector of FIG. 1F or FIG. 25B, with their respective latch 142 secured within latch recess 142.1 of adapter housing 110.

FIG. 24A depicts front body portion 250a end view configured to receive alignment sleeve holder 117a.4 where holder 117a.4 is secured and supported by lips/ledge 250b.1 (refer to FIG. 24A). Holder 117a.4 further comprises latch receiving surface 144a with applies an opposing force to bias latch 142 into recess latch 142.1a or recess latch 142.1b thereby securing fiber optic connector 150 of FIG. 25B within the receptacle port. FIG. 24B is alignment sleeve holder 117a.4 (refer to FIG. 25A) according to another embodiment of the present invention. In FIG. 24B, there are two receptacle ports (124d, 124e) configured to receive the connector of FIG. 25B. Connector 150 of FIG. 25B is received into either port (124d, 124e) and is used in tight spaces typically on racks of fiber optic connectors within a panel that is up against another panel of fiber optic connectors. Placing panels or racks of fiber optic connectors 150 in close proximity saves space, and for this reason fiber optic connector 150 is called a behind-the-wall connector.

FIG. 25A is a front view of FIG. 24B and accepts behind-the-wall connector 150 of FIG. 25B. FIG. 25B depicts fiber optic connector 150 with latch 142, as described above, outer housing 131 holding ferrule assembly 148 biased by spring 119 (refer to FIG. 26) . In operation connector 150 is inserted into alignment sleeve holder 117a.4 of FIG. 25A along dotted lines I1, I2, and latch 142 is positioned on top of latch receiving surface 144a, while latch 142 extends through opening 142.1a of FIG. 24A, thereby securing connector 150 within a receptacle port for example receptacle port 124a. Referring to FIG. 25B, connector 150 has two guide protrusions (131a.1, 131a.2) along outer housing 131 to guide and align connector 150 within alignment sleeve holder and prevent rotation to help ensure a low insertion loss.

FIG. 26 depicts a cross-section along line B-B' of FIG. 22 with fiber optic connector 150 installed at second end 438b. First end 438a shows engagement device 220b comprising middle arm 125 and outer arm 128a ready to accept fiber optic connector 130. Second end 438b shows fiber optic connector 150 installed with spring 119 biasing ferrule assembly 148 forward within the receptacle port. Latch 142 is secured within latch recess 142.1.

FIG. 27 depicts outer housing 131 of fiber optic connector 150 with body portion 133 holding a ferrule assembly, and in this embodiment it is a two-ferrule housing. When connector is inserted into alignment sleeve holder receptacle latch 142 is depressed in direction of arrow D as shown in FIG. 27.

Without departing from the scope of the invention, a figure number 220 with a designation such as 220a, the figure number 220 is the element, in this case an integrated engagement device, while 220a is also an integrated engagement device but copy of duplicate demonstrating expansion of the invention. A designation of 220a.1 means a duplicate of an engagement device but on an opposite side of another 220a.2 engagement device, for example in FIG. 11B.

FIG. 28A depicts adapter 200 with fiber optic connector 160 inserted in a receptacle port at an opposing end from ports having integrated engagement devices configured to accept fiber optic connector 130. Fiber optic connector 160 has a body 161 with one or more ports 161a configured to accept a ferrule flange assembly 170 (refer to FIG. 29C). Referring to FIG. 29C, ferrule flange assembly 170 comprises a ferrule 170.1 with an optic fiber therein, a bias spring 170.2, a flange with a plural of protrusions 170.3 and a raised edge 170.4 at a distal end of the ferrule flange assembly.

FIG. 28B depicts adapter 200 with connector 160 within a receptacle port, the underside of receptacle port 200.1 contains one or more recess (200.1a, 200.1b) configured to receive corresponding protrusion (161.1, 161.2)on a bottom side of connector housing 161. When the protrusion 161.1 is accepted into recess 201.1a, fiber optic connector 160 is stabilized at the underside or bottom side from moving within the receptacle port of the adapter. Alignment sleeve holder 117.5 is an embodiment similar to FIG. 24B above. This helps prevent signal loss between the ferrule of the first connector and opposing second connector. Without departing from the scope of the invention, the protrusion maybe on the adapter side and the recess on the underside of the connector. FIG. 28C.1 depicts alignment sleeve holder 117.5 within a port of adapter 200. Solid line "S" depicts protrusion 161.2 upon insertion of connector 160 (refer to FIG. 28C.2) intol alignment sleeve holder 117.5 port being accepted into recess 201.1a. Likewise for protrusion 161.1 into recess201.1b. FIG. 28C.2 depicts fiber optic connector 160 with body 161 and one or more protrusions (161.1, 161.2) on underside or bottom side of housing 161. Housing 161 has one or more ports 161a that can accept ferrule flange assembly 170.

FIG. 29A depicts fiber optic connector 160 with ferrule flange alignment key (162a, 162b) positioned about each port of (161.a, 161.b) connector 160. FIG. 29B depicts a front view of ferrule flange assembly (170.1, 170.2) installed in ports (161a, 161b) respectively of connector housing 161. Ferrule flange alignment key (162a, 162b) is secured between two protrusions 170.3. This helps to prevent rotation of ferrule with an optical fiber therein when secured into an adapter port opposing another fiber optic connector. And further aids in front loading of ferrule assembly 170 into connector housing 161 port 161a or port 161b.

FIG. 30A depicts cut-out view of front end of fiber optic connector 160 after front loading ferrule assembly 170 into a port of connector housing 161. FIG. 30B depicts a ferrule flange retaining wing located at a distal end of housing 161 port. Wing 165 allows flange raised edge 170.4 to be inserted behind wing 165 shoulder when wing chamfer 165a expands when in contact with raised edge chamfer 170.4a. After wing chamfer is beyond wing 165, wing 165 relaxes and raised edge is secured behind wing 165, and the bias spring retains the ferrule assembly within connector housing 161 port.

An ordinarily skilled person in the art can appreciate that by following the principle of the present invention, a version of the adapter for mating a multi-fiber optic ferrule connector with another multi-fiber optic ferrule connector can be derived without departing from the scope of the invention as defined by the appended claims. Although the embodiments of the present invention described herein are related to multi-fiber optic applications, the present invention can be adapted to single fiber optic applications. Specific details may be omitted so as not to obscure the invention; however, the disclosure is written to enable one skilled in the art to practice the teachings herein without undue experimentation.

The foregoing description of the present invention has been provided for the purposes of illustration and description. It is not intended to be exhaustive or to limit the invention to the precise forms disclosed. Many modifications and variations will be apparent to the practitioner skilled in the art, without departing from the scope of the invention as defined by the appended claims.

The embodiments were chosen and described in order to best explain the principles of the invention and its practical application, thereby enabling others skilled in the art to understand the invention for various embodiments and with various modifications that are suited to the particular use contemplated.

## Claims

1. Fiber optic adapter (200) comprising:
a housing having a first end and a second end with one or more receptacles for receiving a connector,
wherein each receptacle further comprises an integrated engagement device (220a-220f, 520a, 520b) for securing the connector,
wherein the integrated engagement device (220a-220f, 520a, 520b) is not removable, the engagement device (220a-220f, 520a, 520b) comprising two or more outer arms (128a, 128b),
**characterized in that** the two or more outer arms (128a,128b) are configured to engage a widthwise recess on a surface of the connector and the integrated engagement device (220a-220f, 520a, 520b) comprises a middle arm (125)
wherein the middle arm (125) raises the outer arms (128a, 128b) when the middle arm (125) is raised by the connector inserted into the receptacle having the integrated engagement device (220a-220f, 520a, 520b).

2. Fiber optic adapter (200) according to claim 1, wherein the widthwise recess is a groove.

3. Fiber optic adapter (200) according to any of the preceding claims, wherein the integrated engagement device (220a-220f, 520a, 520b) is molded as part of an inner housing of the receptacle.

4. Fiber optic adapter (200) according to claims 1 or 2, wherein the integrated engagement device (220a-220f, 520a, 520b) is ultrasonic welded to an inner housing of the receptacle.

5. Fiber optic adapter (200) according to any of the preceding claims, wherein a second end of the adapter receives a multi-fiber optic ferrule connector further comprising a latch (142) on an outer housing of the connector, the latch (142) is secured in an opening (220d.1) of the adapter housing (110).

## Patentansprüche

1. Faseroptischer Adapter (200), umfassend:
ein Gehäuse mit einem ersten Ende und einem zweiten Ende mit einer oder mehreren Buchsen zum Aufnehmen eines Verbinders,
wobei jede Buchse weiter eine integrierte Halterungsvorrichtung (220a-220f, 520a, 520b) zum Sichern des Verbinders umfasst,
wobei die integrierte Halterungsvorrichtung (220a-220f, 520a, 520b) nicht entfernt werden kann, wobei die Halterungsvorrichtung (220a-220f, 520a, 520b) zwei oder mehr äußere Arme (128a, 128b) umfasst,
**dadurch gekennzeichnet, dass** die zwei oder mehr äußeren Arme (128a, 128b) so konfiguriert sind, dass sie in eine in Breitenrichtung verlaufende Aussparung an einer Oberfläche des Verbinders eingreifen und die integrierte Halterungsvorrichtung (220a-220f, 520a, 520b) einen mittleren Arm (125) umfasst,
wobei der mittlere Arm (125) die äußeren Arme (128a, 128b) anhebt,
wenn der mittlere Arm (125) mittels des Verbinders angehoben wird, der in die Buchse mit der integrierten Halterungsvorrichtung (220a-220f, 520a, 520b) eingesetzt wird.

2. Faseroptischer Adapter (200) nach Anspruch 1, wobei die in Breitenrichtung verlaufende Aussparung eine Nut ist.

3. Faseroptischer Adapter (200) nach einem der vorhergehenden Ansprüche, wobei die integrierte Halterungsvorrichtung (220a-220f, 520a, 520b) als Teil eines inneren Gehäuses der Buchse ausgeformt ist.

4. Faseroptischer Adapter (200) nach Anspruch 1 oder 2, wobei die integrierte Halterungsvorrichtung (220a-220f, 520a, 520b) mit einem inneren Gehäuse der Buchse ultraschallverschweißt ist.

5. Faseroptischer Adapter (200) nach einem der vorhergehenden Ansprüche, wobei ein zweites Ende des Adapters einen multifaseroptischen Ferrule-Verbinder aufnimmt, der weiter eine Verriegelung (142) an einem äußeren Gehäuse des Verbinders umfasst, wobei die Verriegelung (142) in einer Öffnung (220d.1) des Adaptergehäuses (110) gesichert ist.

## Revendications

1. Adaptateur (200) pour fibre optique, comprenant
un boîtier ayant une première extrémité et une seconde extrémité avec un ou plusieurs réceptacles pour recevoir un connecteur,
dans lequel
chaque réceptacle comprend en outre un dispositif d'engagement intégré (220a-220f, 520a, 520b) pour fixer le connecteur,
le dispositif d'engagement intégré (220a-220f, 520a, 520b) n'est pas amovible,
le dispositif d'engagement (220a-220f, 520a, 520b) comprend deux ou plusieurs bras extérieurs (128a, 128b),
**caractérisé en ce que**
les deux ou plusieurs bras extérieurs (128a, 128b) sont configurés pour s'engager dans un renfoncement en largeur sur une surface du connecteur, et le dispositif d'engagement intégré (220a-220f, 520a, 520b) comprend un bras central (125),
le bras central (125) soulève les bras extérieurs (128a, 128b) lorsque le bras central (125) est soulevé par le connecteur inséré dans le réceptacle doté du dispositif d'engagement intégré (220a-220f, 520a, 520b).

2. Adaptateur (200) pour fibre optique selon la revendication 1,
dans lequel le renfoncement en largeur est une rainure.

3. Adaptateur (200) pour fibre optique selon l'une des revendications précédentes,
dans lequel le dispositif d'engagement intégré (220a-220f, 520a, 520b) est moulé en faisant partie d'un boîtier intérieur du réceptacle.

4. Adaptateur (200) pour fibre optique selon la revendication 1 ou 2,
dans lequel le dispositif d'engagement intégré (220a-220f, 520a, 520b) est soudé par ultrasons à un boîtier intérieur du réceptacle.

5. Adaptateur (200) pour fibre optique selon l'une des revendications précédentes,
dans lequel une seconde extrémité de l'adaptateur reçoit un connecteur à embout multifibre optique comprenant en outre un verrou (142) sur un boîtier extérieur du connecteur, le verrou (142) étant fixé dans une ouverture (220d.1) du boîtier (110) de l'adaptateur.
